# EUROPEAN PATENT APPLICATION

(11) **EP 4 369 236 A1**
(43) Date of publication of application: **15.05.2024**
(21) Application number: 22857802.7
(22) Date of filing: 16.08.2022
(51) Int. Cl.: G06F 21/62

(54) **PRODUCT TRACEABILITY MANAGEMENT METHOD AND SYSTEM**

(30) Priority: 19.08.2021 CN 202110952243
(71) Applicant: Siemens Ltd. China, Beijing 100102 (CN)
(72) Inventor: GUO, Daifei, Beijing 100085 (CN); HUANG, Weidong, Beijing 100083 (CN)
(74) Representative: Isarpatent
(86) International application number: PCT/CN2022/112777
(87) International publication number: WO 2023/020491

(57) **Abstract**

Provided in the embodiments of the present application are a product traceability management method and system. The method comprises: acquiring traceability data of a product; storing the traceability data in a first database; acquiring a first hash value corresponding to the traceability data; storing the first hash value in a first blockchain; acquiring, from the traceability data, data that can be queried by a user, and storing, in a second database, the data which can be queried by the user in the traceability data; acquiring a second hash value corresponding to the data, which can be queried by a user in the traceability data; and storing the second hash value in a second blockchain. In the product traceability management method provided in the present application, a mixed dual-blockchain structure is provided, such that the release of necessary data and protection of sensitive data during the production process are realized. Moreover, the storage mode of a blockchain facilitates tamper proofing of product data and the trustworthiness of a data source.

## Description

### TECHNICAL FIELD

The present application relates to the technical field of product traceability, and more specifically, to a product traceability management method and system.

### BACKGROUND

When users purchase products, they want to obtain traceability information of the products in the entire production process from raw materials to manufacturing. On the one hand, in order to obtain the traceability information of the products, a large amount of product-related data needs to be collected in operational technology (OT) systems and non-OT systems. On the other hand, manufacturers want to control the disclosure of data and do not want to release all product-related data such as production data to users or third-party partners. Meanwhile, the users may not trust the data released by the manufacturers because the data stored in the system may be tampered with.

Therefore, how to not only meet the users' needs for trustworthy traceability information for products, but also meet manufacturers' requirements for releasing necessary data, is a problem to be solved urgently.

### SUMMARY

Embodiments of the present application provide a product traceability management method and system. By providing a hybrid dual-blockchain structure, a second blockchain can provide filtered data for a user to query and use, realizing the release of necessary data and the protection of sensitive data in a production process. Moreover, data stored in a first blockchain can facilitate an internal check. Meanwhile, the storage mode of the blockchains facilitates tamper proofing of product data and the trustworthiness of data sources.

In a first aspect, a product traceability management method is provided. The method comprises: obtaining traceability data of a product, the traceability data being used to obtain traceability information of the product; storing the traceability data in a first database; obtaining a first hash value corresponding to the traceability data, the first hash value being used to determine whether data in the first database has been tampered with; storing the first hash value in a first blockchain; obtaining, from the traceability data, data that can be queried by a user, and storing, in a second database, the data in the traceability data that can be queried by the user; obtaining a second hash value corresponding to the data in the traceability data that can be queried by the user, the second hash value being used to determine whether data in the second database has been tampered with; and storing the second hash value in a second blockchain; wherein the data in the second blockchain can be queried by the user, and the data in the first blockchain cannot be queried by the user.

In a second aspect, a product traceability management system is provided. The system comprises a data collection module and a data processing module, wherein the data collection module is configured to obtain traceability data of a product, the traceability data being used to obtain traceability information of the product; and the data processing module is configured to: store the traceability data in a first database; obtain a first hash value corresponding to the traceability data, the first hash value being used to determine whether data in the first database has been tampered with; store the first hash value in a first blockchain; obtain, from the traceability data, data that can be queried by a user, and store, in a second database, the data that can be queried by the user; obtain a second hash value corresponding to the data that can be queried by the user, the second hash value being used to determine whether data in the second database has been tampered with; and store the second hash value in a second blockchain; wherein the data in the second blockchain can be queried by the user, and the data in the first blockchain cannot be queried by the user.

In a third aspect, a product traceability management apparatus is provided. The apparatus comprises: a memory configured to store a program; and a processor configured to execute the program stored in the memory, wherein when the program stored in the memory is executed, the processor is configured to perform the method in the above first aspect or its respective implementations.

In a fourth aspect, a computer-readable storage medium is provided. The medium comprises computer instructions that, when run on an electronic device, cause the electronic device to perform the method in the above first aspect or its respective implementations.

In a fifth aspect, a computer program product is provided. The computer program product comprises a computer program that, when run on a computer device, causes a processing unit in the computer device to perform the method in the above first aspect or its respective implementations.

In the technical solutions of the embodiments of the present application, by providing a hybrid dual-blockchain structure, the second blockchain can provide filtered data for the user to query and use, realizing the release of necessary data in the production process and the protection of sensitive data. Moreover, the data stored in the first blockchain can facilitate an internal check. Meanwhile, the storage mode of the blockchains facilitates tamper proofing of product data and the trustworthiness of data sources.

In a possible implementation, the method further comprises: classifying the traceability data into different categories according to a preset classification configuration, the traceability data of the different categories being used for at least one of the following: quality analysis of the product, production optimization of the product, and tracking of a production process of the product; and storing, in the first blockchain, information used to indicate a category to which the traceability data belongs.

In the embodiments of the present application, classifying and storing the traceability data can facilitate subsequent production data analysis, such as quality analysis or production optimization.

In a possible implementation, the method further comprises: checking whether the traceability data is normal; if the traceability data is normal, then the checking result is normal, or if the traceability data is abnormal, then the checking result is abnormal; and storing the checking result of the traceability data in the first blockchain.

By checking the traceability data, it is easy to find abnormal products and abnormal related environmental conditions, so that the efficiency of abnormal analysis of products or production apparatuses can be provided.

In a possible implementation, the method further comprises: determining predefined key traceability data from the traceability data; and storing the key traceability data in the first blockchain.

In the embodiments of the present application, rapid query of internal data can be realized by storing the key traceability data in the first blockchain.

In a possible implementation, the method further comprises: determining, from the key traceability data, the data that can be queried by the user; and storing, in the second database, the data in the key traceability data that can be queried by the user.

In a possible implementation, obtaining the traceability data of the product comprises: obtaining network traffic through a mirror port of a core switch, and extracting the traceability data from the network traffic; and/or obtaining production data of the product through a unified data collection interface, and extracting the traceability data from the production data.

By setting different modes of data acquisition, a variety of data on products, both inside and outside the factory, can be obtained, thereby improving the efficiency of data collection.

In a possible implementation, the method further comprises: obtaining a query request message from the user, the query request message being used to request to obtain the traceability data of the product; verifying whether the user has the authority to query the traceability data of the product; and if they have the authority, returning the traceability data of the product from the second blockchain and/or the second database; or, if they do not have the authority, rejecting the query request message of the user.

By verifying the authority of the user to determine whether the user can query product data, the release of necessary data and the protection of sensitive data in the production process are realized.

### BRIEF DESCRIPTION OF THE DRAWINGS

FIG. 1 is a schematic architectural diagram of a product traceability management system to which an embodiment of the present application can be applied.
FIG. 2 is a schematic flow chart of a product traceability management method according to an embodiment of the present application.
FIG. 3 is a schematic structural diagram of a production data manager according to an embodiment of the present application.
FIG. 4 is a schematic structural diagram of a data release chain according to an embodiment of the present application.
FIG. 5 is a schematic structural diagram of a production data collector according to an embodiment of the present application.
FIG. 6 is a schematic structural diagram of a product traceability management system according to an embodiment of the present application.
FIG. 7 is a schematic structural diagram of a product traceability management apparatus according to an embodiment of the present application.

List of reference signs:
100, product traceability management system;
110, production data collector;
111, traffic capture identification module;
   1111, traffic extraction configuration database;
   S111a, obtain network traffic through a mirror port of a core switch, and extract the traceability data from the network traffic;
112, unified data collection module;
   1121, unified data extraction configuration database;
   S112a, obtain production data of the product through a unified data collection interface, and extract the traceability data from the production data;
113, data uploader;
120, production data manager;
121, data receiving module;
122, data classification module;
1221, classification configuration database;
123, data checking module;
1231, data compliance configuration database;
124, data filtering module;
1241, data filtering configuration database;
125, data transmission gateway;
130, first blockchain;
140, second blockchain;
141, data release chain;
142, data obtaining module;
143, data integration module;
144, public data blockchain;
150, first database;
160, data query module;
161, authority configuration database;
170, second database;
180, data query party;
200, product traceability management method;
S210, obtain traceability data of a product, the traceability data being used to obtain traceability information of the product;
S220, store the traceability data in a first database;
S230, obtain a first hash value corresponding to the traceability data, the first hash value being used to determine whether data in the first database has been tampered with;
S240, store the first hash value in a first blockchain;
S250, obtain, from the traceability data, data that can be queried by a user, and store, in a second database, the data in the traceability data that can be queried by the user;
S260, obtain a second hash value corresponding to the data in the traceability data that can be queried by the user, the second hash value being used to determine whether data in the second database has been tampered with; and
S270, store the second hash value in a second blockchain;
600, product traceability management system;
610, data collection module;
620, data processing module;
700, product traceability management apparatus;
710, memory; and
720, processor.

### DETAILED DESCRIPTION

The technical solutions in the embodiments of the present application will be described below with reference to the drawings.

When users purchase products, they want to obtain traceability information of the products in the entire production process from raw materials to manufacturing. For example, for the production of dairy products, the users want to obtain data about milk sources and whether the production status and logistics status are normal. On the one hand, the data traceability of the products has increasingly higher requirements for tracking production status, which requires the collection of a large amount of data in OT systems. Moreover, for the raw material data and logistics data of the products, they need to be obtained outside factories, and these data also need to be associated with the products. On the other hand, in terms of product data traceability, manufacturers want to control the disclosure of data and do not want to release all product-related data such as production data to users or third-party partners. Meanwhile, the users may not trust the data released by the manufacturers because the data stored in the systems may be tampered with.

On the basis of the above needs, the present application provides a product traceability management method and system. By providing a hybrid dual-blockchain structure, a second blockchain can provide filtered data for a user to query and use, realizing the release of necessary data and the protection of sensitive data in a production process. Moreover, data stored in a first blockchain can facilitate an internal check. Meanwhile, the storage mode of the blockchains facilitates tamper proofing of product data and the trustworthiness of data sources.

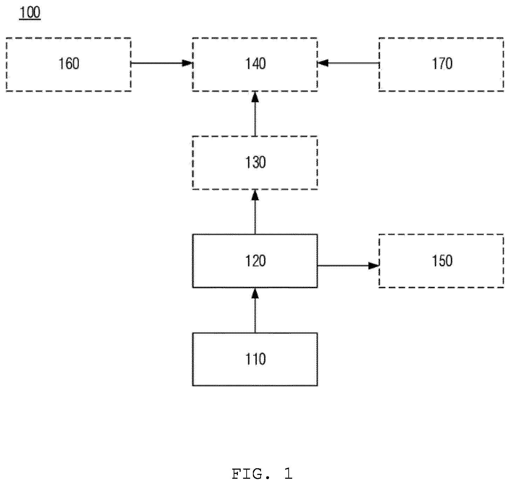

FIG. 1 shows a schematic architectural diagram of a product traceability management system to which an embodiment of the present application can be applied. As shown in FIG. 1, the system 100 may include a production data collector 110 and a production data manager 120.

As an implementation manner, the product traceability management system 100 may also include a first blockchain 130, a second blockchain 140, a first database 150, a second database 170, and a data query module 160. Alternatively, the respective parts described above may also be independent of the product traceability management system 100 in the embodiment of the present application, and the present application is not limited thereto.

The production data collector 110 may collect product-related product data, including product production data inside a factory, and data outside the factory, such as raw materials, logistics data and the like.

The production data manager 120 may be configured to process the collected product-related data, store, in the first block chain 130, data that cannot be queried by a user, and store, in the second blockchain 140, data that can be queried by the user.

In the product traceability management system provided in the embodiment of the present application, by providing a hybrid dual-blockchain structure, the second blockchain can provide filtered data for users to query and use, realizing the release of necessary data and the protection of sensitive data in the production process. Moreover, the data stored in a first blockchain can facilitate an internal check. Meanwhile, the storage mode of the blockchains facilitates tamper proofing of product data and the trustworthiness of data sources.

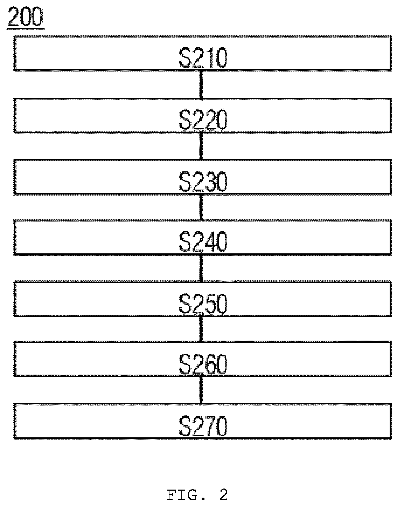

In order to achieve the above objective, a product traceability management method in an embodiment of the present application is shown in FIG. 2. The method can be applied to the traceability management system 100 in FIG. 1.

As shown in FIG. 2, the method 200 includes steps S210 to S270, and these steps will be described in detail below.

S210: Obtain traceability data of a product, the traceability data being used to obtain traceability information of the product.

S220: Store the traceability data in a first database.

S230: Obtain a first hash value corresponding to the traceability data, the first hash value being used to determine whether data in the first database has been tampered with.

S240: Store the first hash value in a first blockchain.

S250: Obtain, from the traceability data, data that can be queried by a user, and store, in a second database, the data in the traceability data that can be queried by the user.

S260: Obtain a second hash value corresponding to the data in the traceability data that can be queried by the user, the second hash value being used to determine whether data in the second database has been tampered with.

S270: Store the second hash value in a second blockchain.

As an implementation, the data in the second blockchain can be queried by the user, and the data in the first blockchain cannot be queried by the user.

Optionally, the traceability data described above may be obtained by the production data collector 110 in FIG. 1.

The production data manager 120 may implement steps S220 to S270 described above.

It should be understood that the first blockchain in the embodiment of the present application may be a private blockchain only for internal query by a manufacturer, such as a dedicated production data blockchain, the second blockchain may be a public blockchain for users and third parties to query, and the present application is not limited thereto.

Optionally, the traceability data in the embodiment of the present application may include at least one of the following data: product batch information, product manufacturing step names and instructions, location information, production process status (e.g., production adjustment parameters sent to a programmable controller (PLC), network connection status, etc.), production environment and device data (e.g., production or environmental parameters, such as temperature, humidity, etc., device or sensor status, pictures or videos of raw materials and products, etc.).

Optionally, in the embodiment of the present application, the first hash value may be obtained after the traceability data is stored in the first database, or the traceability data may be stored in a cache, and then the first hash value may be obtained before the traceability data is stored in the first database, and the embodiment of the present application is not limited thereto.

It should be understood that traceability data generally includes a lot of data such as product raw materials, production-related processes, and logistics data. These data occupy a large amount of memory. Therefore, in the embodiment of the present application, by storing the traceability data in the first database, the space of the blockchain can be released to improve its processing speed. During an internal check, only the relevant data needs to be fed back from the first database.

Since all traceability data is stored in the first database, in order to ensure that the data saved in the first database has not been tampered with, in the embodiment of the present application, the hash value may be used to determine whether the data has been tampered with.

In the embodiment of the present application, the first hash value of the traceability data may be obtained according to an algorithm. For details, reference may be made to the existing technologies, and the embodiment of the present application is not limited thereto.

Furthermore, in order to facilitate subsequent data analysis of the product, in the embodiment of the present application, the traceability data may further be processed.

Specifically, the method further includes: classifying the traceability data into different categories according to a preset classification configuration, the traceability data of the different categories being used for at least one of the following: quality analysis of the product, production optimization of the product, and tracking of a production process of the product; and storing, in the first blockchain, information used to indicate a category to which the traceability data belongs.

Optionally, the information about the category described above may refer to the name of the category, the related uses of the category or the like, and the embodiment of the present application is not limited thereto.

As an implementation, the preset classification configuration described above is configured on the basis of the production process tracking requirements and/or data analysis of the product.

By configuring classification standards according to the product's production process tracking requirements and/or data analysis, it is convenient for subsequent production data analysis, such as quality analysis or production optimization.

Optionally, the preset classification configuration described above may exist in the form of a database.

Optionally, the categories of traceability data in the embodiment of the present application may include at least one of the following: production process parameters, production control processes, environmental parameters, device parameters, device status, network status, production devices, raw materials, or images or videos of the product.

As an implementation, the first hash value in the embodiment of the present application may be obtained on the basis of the classified traceability data. Specifically, the classified traceability data may be packaged into at least one first data packet, and the first hash value may be obtained according to the at least one first packet.

Alternatively, optionally, the classification step in the embodiment of the present application may also exist independently, and is not interdependent with the first hash value. In other words, in the embodiment of the present application, the first hash value may be obtained on the basis of classified traceability data or unclassified traceability data. The present application is not limited thereto.

Specifically, for example, the traceability data is packaged after being classified as described above, and then the corresponding first hash value is generated according to the packaged data packet. Alternatively, the unclassified traceability data may be directly packaged, and the corresponding first hash value is generated according to the data packet without going through the classification step. The embodiment of the present application is not limited thereto.

Optionally, in the embodiment of the present application, after the traceability data is classified, the traceability data may be further checked to verify whether the traceability data is normal. Alternatively, the checking step may be performed before the classification, or at the same time as the classification step. The present application is not limited thereto.

Specifically, the method further includes: checking whether the traceability data is normal; if the traceability data is normal, then the checking result is normal, or if the traceability data is abnormal, then the checking result is abnormal; and storing the checking result of the traceability data in the first blockchain.

Optionally, according to a preset configuration, the traceability data may be checked, and the checking result may be output and stored. For example, for a dairy product, the temperature during the production process should be within a specific range. If the temperature exceeds a preset limit, the checking result is abnormal. After data checking, the checking result may be stored in the first blockchain.

Optionally, the preset configuration may be set according to production process parameter requirements, and the preset configuration may exist in the form of a database. The embodiment of the present application is not limited thereto.

By checking the traceability data and saving the corresponding checking result, it may be convenient to find abnormal products and abnormal related production environments, thereby improving the efficiency of product or production apparatus abnormality analysis.

As an implementation, the category information and checking result described above may be stored in the first database 150.

As an implementation, in the embodiment of the present application, traceability data with a small amount of data may also be stored in the first blockchain. Specifically, the method further includes: determining predefined key traceability data from the traceability data; and storing the key traceability data in the first blockchain.

It should be understood that the amount of data mentioned in the embodiment of the present application may refer to the memory size occupied by the data, and the present application is not limited thereto.

Optionally, the predefined key traceability data described above may be set according to product quality or production requirements, and the embodiment of the present application is not limited thereto.

By storing core key traceability data in the first blockchain, rapid query of product data may be realized.

Optionally, the key traceability data in the embodiment of the present application may include at least one of the following: product batch information, product manufacturing step names and instructions, etc.

As an implementation, if some data needs to be released to external partners or users, in the embodiment of the present application, the traceability data that can be queried by the user may further be determined from the traceability data according to the preset configuration, that is, step S250.

Optionally, the data that can be queried by the user described above may be determined according to a preset configuration, such as a preset filtering configuration. The configuration may be determined according to the confidentiality level of the product data, and may exist in the form of a database.

Optionally, different authority levels may be set for external partners or users.

Similarly, since the data in the traceability data that can be queried by the user may occupy a large amount of memory, the data that can be queried by the user may be stored in a second database, such as the second database 170. Meanwhile, in order to ensure that the data stored in the second database has not been tampered with, the second hash value may be further used to determine whether the data has been tampered with.

As an implementation, a part of the traceability data with a relatively small amount of data may also be stored in the second blockchain. Specifically, the method further includes: determining, from the key traceability data, data that can be queried by the user; and storing, in the second blockchain, the data in the key traceability data that can be queried by the user.

Optionally, when the aforementioned category information or checking result is stored in the first blockchain, the second blockchain may obtain the above data from the first blockchain and store same in the second blockchain.

Optionally, the method of generating the second hash value may be to package the data on the basis of the aforementioned classified traceability data, or the data may also be packaged in other ways. The present application is not limited thereto.

Specifically, the data in the key traceability data that can be queried by the user may be packaged into at least one second data packet, and the second hash value is obtained according to the at least one second data packet.

Optionally, when the algorithm for generating the second hash value is based on the algorithm of the first hash value, the numerical value included in the second hash value may be a subset of the first hash value. Alternatively, when different packaging modes are used, the first hash value and the second hash value may be irrelevant. The embodiment of the present application is not limited thereto.

It should be understood that the method of obtaining the hash value according to the algorithm belongs to the existing technologies, and for specific calculation methods, reference may be made to the existing technologies, and they will not be described in detail in the embodiment of the present application.

It should be understood that the hash value in the embodiment of the present application is different from the hash value on each block in the blockchain in the existing technologies. The first hash value and the second hash value in the embodiment of the present application are hash values generated for the traceability data.

Optionally, the traceability data that can be queried by the user in the embodiment of the present application may include at least one of the following data: product batch information, product manufacturing step names, location information, category information, checking results, and some selected raw materials (such as product pictures).

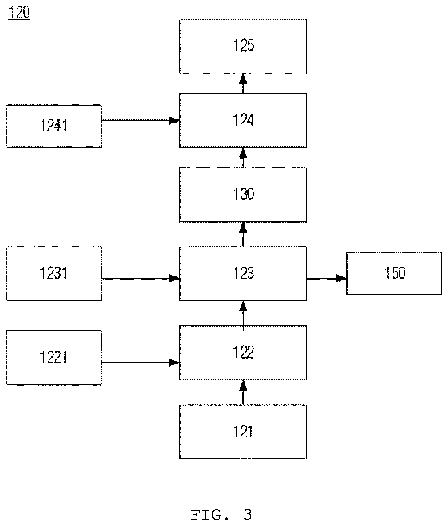

Optionally, the above classification and checking of traceability data and steps S220 to S270 may be implemented by the production data manager 120 in the embodiment of the present application. FIG. 3 shows a schematic structural diagram of a production data manager in the embodiment of the present application.

As shown in FIG. 3, the production data manager 120 may include a data receiving module 121, a data classification module 122, a data checking module 123, and a data filtering module 124.

The data receiving module 121 may receive the traceability data from the production data collector 110, and optionally, may receive the traceability data through a data transmission gateway.

Subsequently, the data classification module 122 may classify the traceability data according to a preset classification configuration as in a classification configuration database 1221 in the embodiment of the present application.

Further, the data checking module 123 may check the traceability data according to the preset configuration as in a data compliance configuration database 1231 in the embodiment of the present application, output the checking result, and then upload the checking result to the first blockchain and/or the first database.

Furthermore, the traceability data that can be queried by the user, or may be released to the user or a third party, may be filtered through the data filtering module 124 on the basis of a preset configuration as in the data filtering configuration database 1241 in the embodiment of the present application, thereby selecting traceability data that can be queried by the user.

It should be understood that the hash values uploaded to the first blockchain and the second blockchain may also be obtained by the production data manager. For example, they may be completed by a processing module in the production data manager, or may also be completed by other modules in the product traceability management system. The present application is not limited thereto.

Subsequently, the production data manager 120 may upload the data that can be queried by the user to the second blockchain. Specifically, the data may be transmitted through the data transmission gateway 125.

It should be understood that the uses of the respective modules in FIG. 3 described above are only briefly described here. For specific steps, reference may be made to the aforementioned description of the product traceability management method, and they will not be repeated here.

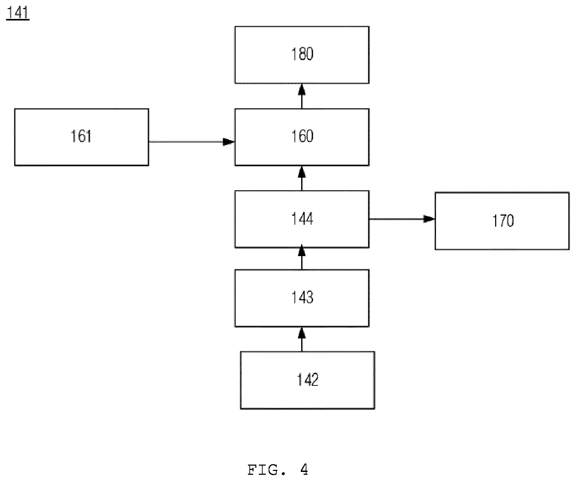

As an implementation, the second blockchain 140 in the embodiment of the present application may be implemented in the form of a public release chain 141. FIG. 4 shows a schematic structural diagram of the public release chain in the embodiment of the present application.

As shown in FIG. 4, the public release chain 141 may include a data obtaining module 142, a data integration module 143, and a public data blockchain 144.

Specifically, after the data obtaining module 142 obtains, from the production data manager 120, the traceability data that can be queried by the user, it may further be checked whether the data is compatible with the requirements of the public data blockchain 144. For example, it may be verified through format verification. For example, whether or not the required data is missing may be verified, etc. Subsequently, the data integration module 143 may merge the corresponding data into the same data set according to the product and its corresponding batch information. For specific processes, reference may be made to the existing technologies, and they will not be described in detail in the present application.

Subsequently, the data integration module 143 stores the integrated data set into the second database 170, and at the same time, uploads the second hash value corresponding to the integrated data set to the public data blockchain 144, so that whether or not the data in the second database 170 has been tampered with can be determined.

As an implementation, the system 100 in the embodiment of the present application may also include a data query module 160. Through the data query module 160, the user (such as a data query party 180 in FIG. 4) may query data of related products. Specifically, the method further includes: obtaining a query request message from the user, the query request message being used to request to obtain the traceability data of the product; verifying whether the user has authority to query the traceability data of the product; and if they have the authority, returning the second data of the product from the second blockchain and/or the second database; or, if they do not have the authority, rejecting the query request message of the user.

It should be understood that the data query module 160 in the embodiment of the present application may be a data query module for the second blockchain, that is, only the second blockchain is open to external users or third parties, and the users cannot obtain data in the first blockchain through the data query module 160.

Optionally, in the embodiment of the present application, whether or not the user has the authority to query product data may be determined according to a preset configuration. The preset configuration may be set according to the technical confidentiality requirements of the product, etc., and may exist in the form of an authority database, such as an authority configuration database 161. The present application is not limited thereto.

As an implementation, in the embodiment of the present application, the aforementioned checking results may be combined with the user's query authority. For example, if the checking result is abnormal, the user will be prevented from querying the corresponding product data by default. Specifically, if the checking result is abnormal, the user's query request will be rejected.

Alternatively, according to other rules, even if the checking result is abnormal, the corresponding data may be queried by the user.

As an implementation, the production data collector in the embodiment of the present application may be an edge computing-based data collector. Specifically, the current mode of obtaining product traceability information is generally to obtain product-related data of various manufacturers from a centralized supply chain system, and then perform centralized processing. Due to the huge amount of data related to product traceability, this mode of obtaining data will slow down the processing speed of the system. However, in the embodiment of the present application, by applying an edge computing-based production data collector, several production data collectors may be deployed in relevant environments, such as inside a factory or outside a factory where raw materials are located.

The edge-based production data collector collects production-related data, performs certain calculations and processes, and then sends the data to the production data manager for centralized processing. This can greatly improve the processing speed of the product traceability management system.

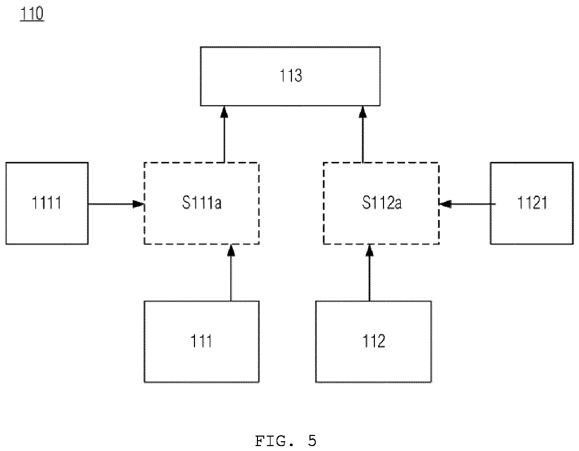

Specifically, FIG. 5 shows a schematic structural diagram of an edge computing-based production data collector according to an embodiment of the present application. As shown in FIG. 5, the production data collector 110 may include a traffic capture identification module 111 and a unified data collection module 112.

As an implementation, the data collector 110 may be arranged in an operational technology system of the product within the factory, and/or in a relevant environment of the product outside the factory. Correspondingly, the traceability data is obtained from the operational technology system of the product within the factory, and/or from the relevant environment of the product outside the factory.

Since some data of the product cannot be collected through a standard data collection interface, but the relevant data needs to be extracted through network traffic, at this time, the traffic capture identification module 111 in the embodiment of the present application may be used to collect the data.

As an implementation, obtaining the traceability data of the product in the embodiment of the present application includes: obtaining the network traffic through a mirror port of a core switch, and extracting the traceability data from the network traffic, that is, S111a.

For example, the traffic capture identification module 111 may identify an industry protocol corresponding to the product, obtain the network traffic through the mirror port according to the production-related process flow corresponding to the industry protocol of the product, etc., and then extract required traceability data from the network traffic according to a preset configuration.

Optionally, at least one of the following traceability data items may be obtained from the network traffic: production adjustment parameters sent to the PLC, sensor values or status of a device sent by the PLC, network connection status, PLC status, and control commands sent to the PLC.

It should be understood that during the production process of the product, the status of the production device, the network or the like may change at any time, and these changes will also have a certain impact on the final form of the product. Therefore, by obtaining the above data, various changes experienced by the product during the production process can be recorded, so that a deeper understanding and control of the product can be obtained.

In contrast with the above related data that cannot be collected using the unified data interface, a part of the product data may be collected through the unified data interface.

As another implementation, in the embodiment of the present application, the production data of the product may also be obtained through the unified data collection interface, and the traceability data may be extracted from the production data, that is, S112a.

For example, production data such as device logs, sensor data, host data or unstructured data are collected through standard data collection interfaces. After the above production data is collected, relevant traceability data may further be extracted from the above production data according to a preset configuration.

Optionally, at least one of the following traceability data items may be obtained from the collected production data: product batch information, product manufacturing step names and instructions, location information, production or environmental parameters (such as temperature, humidity and pressure), device or sensor status, pictures or photos or videos of production devices, raw materials or products, etc.

Optionally, extracting the traceability data from network traffic or production data described above may be performed according to a configuration of product production tracking requirements. The configuration may specifically exist in the form of a database as in a traffic extraction configuration database 1111 and a unified data extraction configuration database 1121. The embodiment of the present application is not limited thereto.

After the production data collector 110 in the embodiment of the present application collects product-related data and obtains the required traceability data according to the preset configuration, it may send the traceability data to the production data manager 120 for processing. Specifically, the data may be sent through a data uploader 113.

Optionally, after collecting the traceability data, the production data collector 110 deployed outside the factory may send the traceability data to the production data manager 120 through a data transmission gateway. The data transmission gateway may be a server deployed at a border, etc.

Through the edge computing-based production data collector in the embodiment of the present application, diverse data in OT systems and non-OT systems can be effectively collected, improving the data collection efficiency of different production processes. Meanwhile, the processing burden of the system center can be reduced, and the processing speed can be improved.

Through the product traceability management method and system in the embodiments of the present application, the edge computing-based production data collector can be used to effectively collect diverse data from OT systems and other data sources, improving the data collection efficiency in different production processes of products. The structure of the blockchain can facilitate tamper proofing of the products and the trustworthiness of data sources. Through the dual-blockchain structure, filtered data can be conveniently provided for the user to query and use, realizing the release of necessary data and the protection of sensitive data in the production process. Meanwhile, the data stored in the first blockchain can facilitate internal checking, and at the same time, by collecting detailed data of the products and preliminary checking results, it is easy to find abnormal products and abnormal related environmental conditions, improving the efficiency of abnormal analysis of products or production apparatuses.

For ease of understanding, an embodiment of the present application provides a traceability management process taking a dairy product as an example. Specifically, the process may include the following steps:
(1) When milk is collected on a piece of grassland, i.e., outside a dairy production factory, an edge computing-based data collector may collect relevant data of the milk and send the collected relevant data to a production data manager through a data transmission gateway. The data may include batch information, grassland data, location, time and environmental condition parameters, etc.
   Optionally, milk-related data may be collected using the unified data collection module in the aforementioned embodiment, or may also be collected through a mirror port of a core switch. A specific implementation may be selected according to whether the data has a standard interface.
(2) When the milk enters the factory for processing, the edge computing-based data collector deployed in the factory OT system may collect sensor data and unstructured data (such as pictures or videos of products and production devices), device logs, host status and other data. For example, the unified data collection module in the edge computing-based data collector may collect the above data according to a standard data collection interface, and extract the required traceability data from the above data. Alternatively, it is also possible to collect traffic data through a traffic data extraction module and extract the required traceability data from the traffic data.
(3) After a data receiver of the production data manager obtains data from the data collector, a data classification module will classify the data into different categories according to a category configuration database, such as production technical parameters, production control processes, environmental parameters, device parameters, and images of production devices, raw materials, products or the like.
(4) After data classification, a data checking module may verify, according to a data compliance configuration database, whether the data is normal, and record checking results. For example, if the processing temperature exceeds a specific range at a certain stage, the checking results are recorded as abnormal results.
(5) Raw data (the traceability data obtained by the data collector described above), classification category information and checking results may be stored in a first raw database (i.e., the aforementioned first database). A selected message digest (i.e., the aforementioned first hash value) with a small amount of key traceability data and classified raw data may be stored in a production data blockchain (i.e., the aforementioned first blockchain).
   The key traceability data may include: product batch information, product manufacturing step names and instructions, classification names, checking results, etc.
(6) Some data need to be released to external partners or users, or some data may be queried by users or external partners. A data filtering module may obtain relevant data from the production data blockchain and/or the first raw database according to the definition of a data filtering database. The data that can be released may include product batch information, product manufacturing step names, location information, category information, checking results, and product pictures at a certain production stage.
(7) The above data that can be queried may be uploaded to a public data blockchain. The data (e.g., product pictures, etc.) that can be queried by users will be stored in a second raw database (e.g., the above-mentioned second database) corresponding to the public data blockchain, and a message digest (the aforementioned second hash value) of the data that can be queried by users may be uploaded to the public data blockchain.
(8) When users obtain products with 2D barcodes, they can query the relevant data of the products. For example, they may query product batch information, product manufacturing step names, location information, temperature checking results, etc.
(9) Before users query the results, they need to verify their authority according to the definition of the authority. The definition of the authority may be combined with the checking results. For example, if the checking results are abnormal, a rule is to prevent the users from querying the corresponding data by default. On the other hand, if the rule defines certain data, users may query the corresponding data even if the checking rule is abnormal.

Through the above-mentioned traceability management process, complete and diverse data collection may be provided for the entire process of products from raw materials to production, improving the collection efficiency of different data. Moreover, through the edge computing-based data collector, the processing pressure in the center of the system can be alleviated, improving the processing speed of the system. Based on the collected detailed product data and checking results, abnormal products and abnormal related environmental conditions can be found in time, facilitating product quality analysis and internal checking, and improving the efficiency of product or production apparatus analysis. Through the hybrid dual-blockchain structure, the release of necessary data and the protection of sensitive data in the production process can be realized.

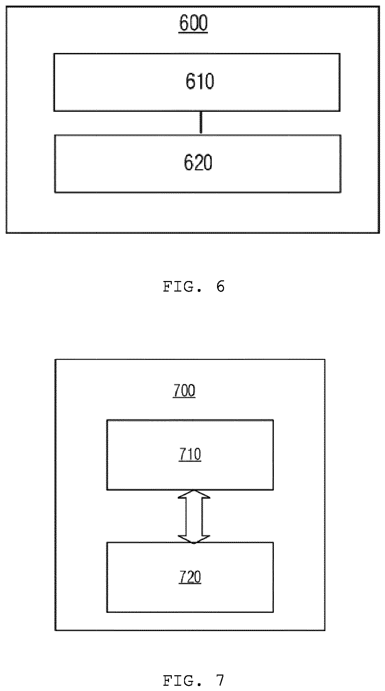

FIG. 6 shows a schematic diagram of a product traceability management system according to an embodiment of the present application. As shown in FIG. 6, the system 600 may include a data collection module 610 and a data processing module 620.

The data collection module 610 may realize the function of the production data collector 110 in the previous embodiment, and the data processing module 620 may realize the function of the production data manager 120 in the previous embodiment.

Optionally, the data collection module 610 is configured to obtain traceability data of a product, the traceability data being used to obtain traceability information of the product; and the data processing module 620 is configured to: store the traceability data in a first database; obtain a first hash value corresponding to the traceability data, the first hash value being used to determine whether data in the first database has been tampered with; store the first hash value in a first blockchain; obtain, from the traceability data, data that can be queried by a user, and store, in a second database, the data that can be queried by the user; obtain a second hash value corresponding to the data that can be queried by the user, the second hash value being used to determine whether data in the second database has been tampered with; and store the second hash value in a second blockchain; wherein the data in the second blockchain can be queried by the user, and the data in the first blockchain cannot be queried by the user.

FIG. 7 shows a schematic structural diagram of a product traceability management apparatus according to an embodiment of the present application. The apparatus 700 shown in FIG. 7 includes a memory 710 and a processor 720.

The memory 710 is configured to store executable instructions, and the processor 720 is configured to call and run the executable instructions in the memory 710 to implement the method in the embodiment of the present application.

The above-mentioned processor may be an integrated circuit chip with signal processing capabilities. During the implementation process, each step of the above-mentioned method embodiment may be implemented through an integrated logic circuit of hardware in the processor or instructions in the form of software. The above-mentioned processor may be a general-purpose processor, a digital signal processor (DSP), an application specific integrated circuit (ASIC), a field programmable gate array (FPGA) or other programmable logic devices, discrete gate or transistor logic devices, or discrete hardware components. Each method, step and logical block diagram disclosed in the embodiment of the present application may be implemented or executed. The general-purpose processor may be a microprocessor, or the processor may be any conventional processor, etc. The steps of the method disclosed in conjunction with the embodiments of the present application may be directly implemented by a hardware decoding processor, or implemented by a combination of hardware and software modules in the decoding processor. The software module may be located in a random access memory, a flash memory, a read-only memory, a programmable read-only memory or an electrically erasable programmable memory, a register or other mature storage media in the art. The storage medium is located in the memory, and the processor reads the data in the memory and implements the steps of the above-mentioned method in combination with its hardware.

The above-mentioned memory may be a volatile memory or a non-volatile memory, or may include both volatile and non-volatile memories. The non-volatile memory may be a read-only memory (ROM), a programmable read-only memory (PROM), an erasable programmable read-only memory (EPROM), an electrically erasable programmable read-only memory (EEPROM) or a flash memory. The volatile memory may be a random access memory (RAM), which is used as an external cache. By way of illustration but not limitation, many forms of RAMs may be used, such as static random access memories (SRAM), dynamic random access memories (DRAM), synchronous dynamic random access memories (SDRAM), double data rate synchronous dynamic random access memories (DDR SDRAM), enhanced synchronous dynamic random access memories (ESDRAM), synchlink dynamic random access memories (SLDRAM) and direct rambus random access memories (DR RAM).

An embodiment of the present application further provides a computer-readable storage medium for storing a computer program. The computer-readable storage medium may be applied to the apparatus in the embodiment of the present application, and the computer program causes the apparatus to perform various methods of the embodiments of the present application.

An embodiment of the present application further provides a computer program product, including computer program instructions. The computer program product may be applied to the apparatus in the embodiment of the present application, and the computer program instructions cause the apparatus to perform various methods of the embodiments of the present application.

Only specific implementations of the present application are described above, but the scope of protection of the present application is not limited thereto. Any skilled person familiar with the technical field can easily conceive of various equivalent modifications or replacements within the technical scope disclosed in the present application, and these modifications or replacements shall be covered within the scope of protection of the present application. Therefore, the scope of protection of the present application shall be subject to the scope of protection of the claims.

## Claims

1. A product traceability management method, **characterized in that** the method comprises:
obtaining traceability data of a product, the traceability data being used to obtain traceability information of the product;
storing the traceability data in a first database;
obtaining a first hash value corresponding to the traceability data, the first hash value being used to determine whether data in the first database has been tampered with;
storing the first hash value in a first blockchain;
obtaining, from the traceability data, data that can be queried by a user, and storing, in a second database, the data in the traceability data that can be queried by the user;
obtaining a second hash value corresponding to the data in the traceability data that can be queried by the user, the second hash value being used to determine whether data in the second database has been tampered with; and
storing the second hash value in a second blockchain;
wherein the data in the second blockchain can be queried by the user, and the data in the first blockchain cannot be queried by the user.

2. The method according to claim 1, **characterized in that** the method further comprises:
classifying the traceability data into different categories according to a preset classification configuration, the traceability data of the different categories being used for at least one of the following: quality analysis of the product, production optimization of the product, and tracking of a production process of the product; and
storing, in the first blockchain, information used to indicate a category to which the traceability data belongs.

3. The method according to claim 1 or 2, **characterized in that** the method further comprises:
checking whether the traceability data is normal;
if the traceability data is normal, then the checking result is normal, or if the traceability data is abnormal, then the checking result is abnormal; and
storing the checking result of the traceability data in the first blockchain.

4. The method according to any one of claims 1 to 3, **characterized in that** the method further comprises:
determining predefined key traceability data from the traceability data; and
storing the key traceability data in the first blockchain.

5. The method according to claim 4, **characterized in that** the method further comprises:
determining, from the key traceability data, the data that can be queried by the user;
storing, in the second database, the data in the key traceability data that can be queried by the user.

6. The method according to any one of claims 1 to 5, **characterized in that** said obtaining of the traceability data of the product comprises:
obtaining network traffic through a mirror port of a core switch, and extracting the traceability data from the network traffic; and/or
obtaining production data of the product through a unified data collection interface, and extracting the traceability data from the production data.

7. The method according to any one of claims 1 to 6, **characterized in that** the method further comprises:
obtaining a query request message from the user, the query request message being used to request to obtain the traceability data of the product;
verifying whether the user has the authority to query the traceability data of the product; and
if they have the authority, returning the traceability data of the product from the second blockchain and/or the second database; or, if they do not have the authority, rejecting the query request message of the user.

8. A product traceability management system, **characterized in that** the system comprises a data collection module and a data processing module, wherein
the data collection module is configured to obtain traceability data of a product, the traceability data being used to obtain traceability information of the product; and
the data processing module is configured to:
store the traceability data in a first database;
obtain a first hash value corresponding to the traceability data, the first hash value being used to determine whether data in the first database has been tampered with;
store the first hash value in a first blockchain;
obtain, from the traceability data, data that can be queried by a user, and store, in a second database, the data that can be queried by the user;
obtain a second hash value corresponding to the data that can be queried by the user, the second hash value being used to determine whether data in the second database has been tampered with; and
store the second hash value in a second blockchain;
wherein the data in the second blockchain can be queried by the user, and the data in the first blockchain cannot be queried by the user.

9. A product traceability management apparatus, **characterized in that** the apparatus comprises:
a memory configured to store a program; and
a processor configured to execute the program stored in the memory, wherein when the program stored in the memory is executed, the processor is configured to perform the product traceability management method according to any one of claims 1 to 7.

10. A computer-readable storage medium, **characterized in that** the computer-readable medium stores program codes for being executed by a device, the program codes comprising instructions for performing the steps in the product traceability management method according to any one of claims 1 to 7.
